# EUROPEAN PATENT APPLICATION

(11) **EP 1 775 497 A2**
(43) Date of publication of application: **18.04.2007**
(21) Application number: 06021567.0
(22) Date of filing: 13.10.2006
(51) Int. Cl.: F16G 5/18

(54) **Transmission chain and transmission using the same**

(30) Priority: 14.10.2005 JP 2005299917; 14.10.2005 JP 2005299918
(71) Applicant: JTEKT CORPORATION, Chuo-ku Osaka-shi Osaka 542-8502 (JP)
(72) Inventor: Tada, Seiji c/o JTEKT CORPORATION, Osaka-shi Osaka 542-8502 (JP); Kamamoto, Shigeo c/o JTEKT CORPORATION, Osaka-shi Osaka 542-8502 (JP)
(74) Representative: Schaeberle, Steffen

(57) **Abstract**

The transmission chain (1) includes: a plurality of sets, in which first (A), second (B), and third (C) link rows are combined into one unit, each of the link rows (A,B,C) having a plurality of links (11,12,13) arranged in a chain width direction. In one of the link rows, two links which are adjacent to each other in the chain width direction of the one of the link row interpose therebetween two links and belonging to other two link rows, respectively. As well in the other link rows, two links adjacent to each other interpose therebetween two links belonging to other two link rows, respectively.

## Description

### BACKGROUND OF THE INVENTION

The present invention relates to a transmission chain used in a chain type continuously variable transmission or the like of a vehicle, and a transmission using the same.

For example, a continuously variable transmission of a vehicle includes a drive pulley disposed at an engine, a driven pulley disposed at a driving wheel, and an endless transmission chain (hereinafter, simply referred to as 'chain') provided between the two pulleys. The chain has a plurality of link rows each having a plurality of links, and a plurality of pin members by which the link rows are connected to each other. In the chain type continuously variable transmission (CVT), as a conical sheave surface of each pulley slidably abuts an end surface of a pin member of a transmission chain in a circumferential direction of the sheave surface, thus generating traction, whereby power is transmitted by the traction. By continuously selecting a groove width of either the drive pulley and the driven pulley, continuous shifting of speed can be more smoothly performed, as compared to a gear shift according to a related art (for example, see Patent Document 1).
Patent Document 1: JP-A-2-195045

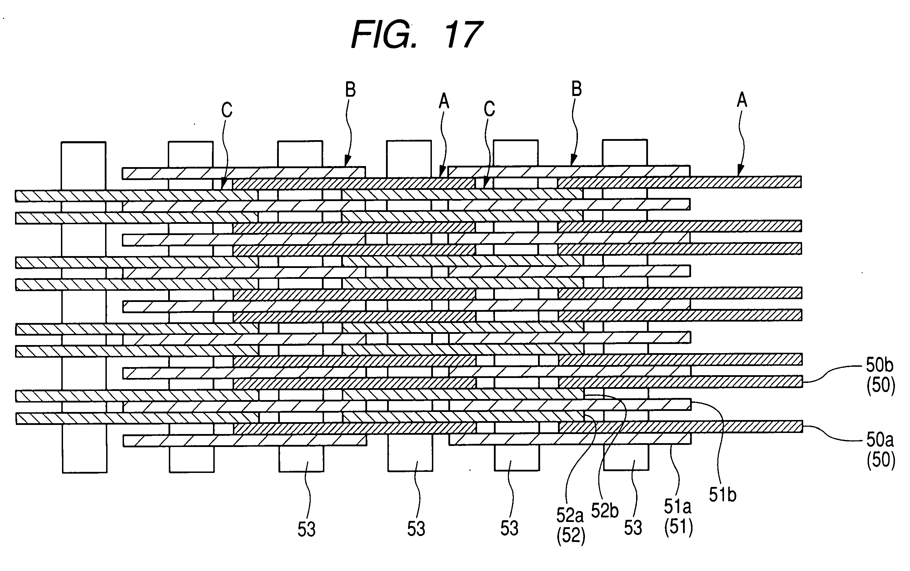

Fig. 17 is a view showing a general arrangement pattern of links of a transmission chain of the related art used in a continuously variable transmission. The chain includes a plurality of sets composed of three kinds of link row - first, second, and third link rows (A, B, and C) - each link row (A, B, and C) has a plurality of links (50, 51, and 52) arranged parallel to a width direction of the chain. In the first link row A, three links 51b, 52a, and 52b that other second and third link rows B and C respectively have are disposed between a link 50a located at an endmost in a chain width direction and a link 50b adjacent to the link 50a.

In the chain used in the CVT, power is transmitted by bringing both end surfaces of pin members 53 into contact with the sheave surface of the pulley, the pin members 53 passing through the links to connect the links. Therefore, a great load is applied to the link 50a located at the endmost in the chain width direction which is close to the end surface of the pin member 53, to which power is transmitted, than other links located at the center part. Moreover, because three links 51b, 52a, and 52b exist between the link 50a located at the endmost in the chain width direction and the link 50b adjacent to the link 50a of the first link row A, an interval between the links 50a and 50b is large; therefore, the load applied to the link 50a located at the endmost is likely to increase. As a result, in the chain according to the related art, in parts where an interval between two links is large in one link row, one link is subject to a great load. Particularly, a great load is applied when this kind of chain is used, which deteriorates durability in the related art.

### SUMMARY OF THE INVENTION

The invention has been made in view of the drawbacks inherent in the conventional antenna, and it is an object of the invention to provide a transmission chain capable of preventing one link from being subject to a great load and improving durability, and a transmission using the same.

A further object of the invention is to provide a transmission chain capable of preventing one link located at endmost from being subject to a great load, thus improving durability, and a transmission using the same. In order to achieve the above object, the present invention characterized by the following arrangement.
(1) A transmission chain according to the invention includes:
   a plurality of first link rows, each of the first link rows including a plurality of links arranged in a chain width direction;
   a plurality of second link rows, each of the second link rows including a plurality of links arranged in the chain width direction;
   a plurality of third link rows, each of the third link rows including a plurality of links arranged in the chain width direction,
   wherein the first link rows, the second link rows and the third link rows are arranged so that the first link row, the second link row and the third link row are repeatedly arranged in this order in a chain proceeding direction,
   wherein the adjacent link rows are respectively coupled by pin members, end surfaces of the pin members being in contact with a surface to which power is to be transmitted,
   wherein the two links of the first link row, which are adjacent to each other and located at endmost in the chain width direction, interpose therebetween the two links respectively belonging to the second and third link rows,
   wherein the two links of the second link row, which are adjacent to each other and located at endmost in the chain width direction, interpose therebetween the two links respectively belonging to the third and first link rows,
   wherein the two links of the third link row, which are adjacent to each other and located at endmost in the chain width direction, interpose therebetween the two links respectively belonging to the first and second link rows.
(2) The transmission chain according to claim 1,
   wherein all of the two adjacent two links of the first link row interpose therebetween the two links respectively belonging to the second and third rows,
   wherein all of the two adjacent two links of the second link row interpose therebetween the two links respectively belonging to the third and first rows, and
   wherein all of the two adjacent two links of the third link row interpose therebetween the two links respectively belonging to the first and second rows.
(3) The transmission chain according to (2), wherein at least two of the first, second and third link rows are asymmetric with respect to a centerline in the chain width direction.
(4) The transmission chain according to (1),
   wherein each of the first, second and third link rows has an arrangement in which the two links which are adjacent to each other and located apart from the center part in the chain width direction interpose therebetween two links belonging to the other two link rows, respectively.
(5) The transmission chain according to (1),
   wherein in each of the first, second and third link rows, the links thereof are symmetrically disposed with respect to a centerline in the chain width direction.
(6) A transmission comprising:
   a first pulley that includes a conical sheave surface;
   a second pulley that includes a conical sheave surface; and
   a transmission chain that is provided between the first pulley and the second pulley,
wherein the transmission chain is the transmission chain according to any one of claims 1 to 5.

According to the invention, since two links which are adjacent to each other and located at endmost in the chain width direction of one link row interpose only two links belonging to other two link rows, respectively, the intervals between the links can be made small. Accordingly, although a great load is locally applied to the link row located at endmost, it is prevented that a great load is locally applied to the link located at endmost, which improves durability.

According to the invention, two links which are adjacent to each other and located at endmost in the chain width direction of one link row interpose two links belonging to other two link rows, respectively. Further, the first, second, and third link rows are arranged in the same manner. Therefore, since two links which are adjacent to each other interpose only two links belonging to other two link rows, respectively, the intervals between the links are equal. Accordingly, it is prevented that a great load is locally applied to one link, which improves durability.

According to the invention, load applied to the chain can be made equal as a whole. As the links are symmetrically disposed, it is possible to prevent moment from being generated due to the construction of the transmission chain.

According to the invention, the durability of the chain can be improved, so that a transmission that stably transmits power for a long time can be achieved.

According to the invention, the intervals between two links which are adjacent to each other in the chain width direction of one link row can be made equal, so that it is prevented that a great load is locally applied to one link. As a result, even when a great load is applied, it is possible to improve durability.

### BRIEF DESCRIPTION OF THE DRAWINGS

Fig. 1 is a perspective view showing a main construction of a transmission chain according to a first embodiment of the invention.
Fig. 2 is a front view showing the main construction of the transmission chain according to the first embodiment.
Fig. 3 is a rear view showing the main construction of the transmission chain according to the first embodiment.
Fig. 4 is a right side view showing the main construction of the transmission chain according to the first embodiment.
Fig- 5 is a left side view showing the main construction of the transmission chain according to the first embodiment.
Fig. 6 is a plan view showing the main construction of the transmission chain according to the first embodiment.
Fig. 7 is a bottom view showing the main construction of the transmission chain according to the first embodiment.
Fig. 8 is a plan view schematically showing an arrangement of a plurality of links according to the first embodiment.
Fig. 9 is a perspective view showing a main construction of a transmission chain according to a second embodiment of the invention.
Fig. 10 is a front view showing the main construction of the transmission chain according to the second embodiment.
Fig. 11 is a right side view showing the main construction of the transmission chain according to the second embodiment.
Fig. 12 is a left side view showing the main construction of the transmission chain according to the second embodiment.
Fig. 13 is a plan view showing the main construction of the transmission chain according to the second embodiment.
Fig. 14 is a bottom view showing the main construction of the transmission chain according to the second embodiment.
Fig. 15 is a plan view schematically showing an arrangement of a plurality of links according to the second embodiment.
Fig. 16 is a perspective view schematically showing a main construction of a transmission according to the invention.
Fig. 17 is a plan view schematically showing an arrangement of links of a transmission chain according to a related art.

### DETAILED DESCRIPTION OF PREFERRED EMBODIMENTS

Hereinafter, embodiments of the invention will be described with reference to the accompanying drawings.

### First Embodiment

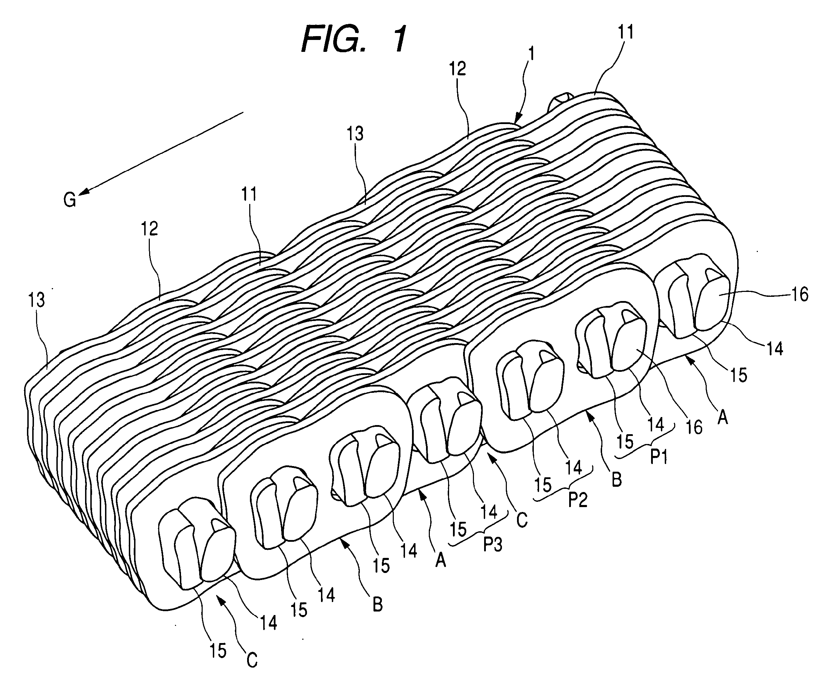

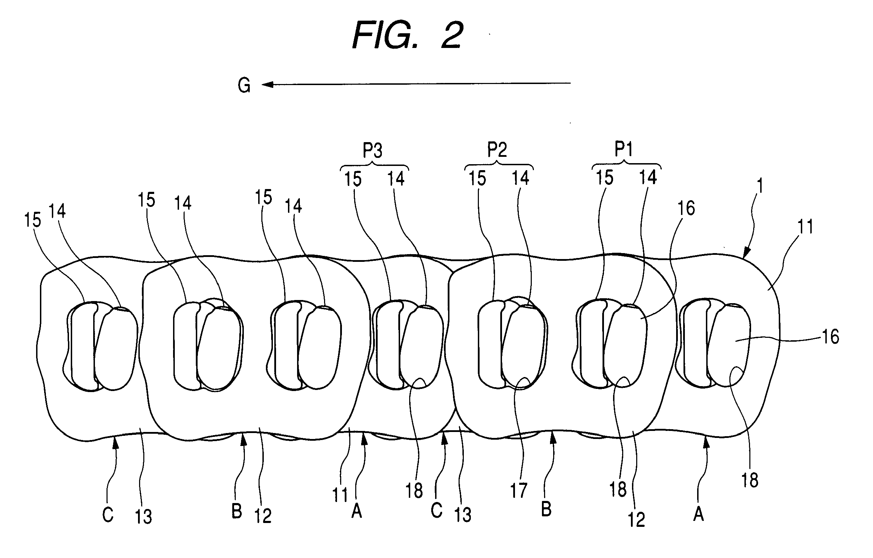

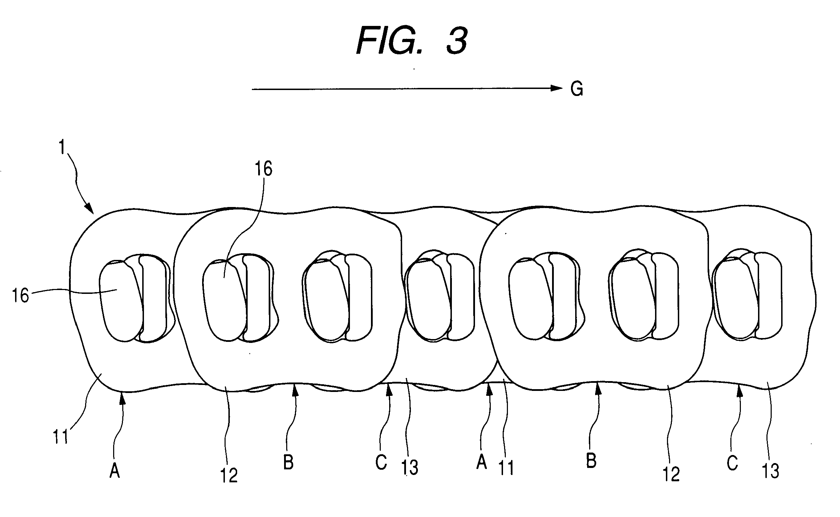

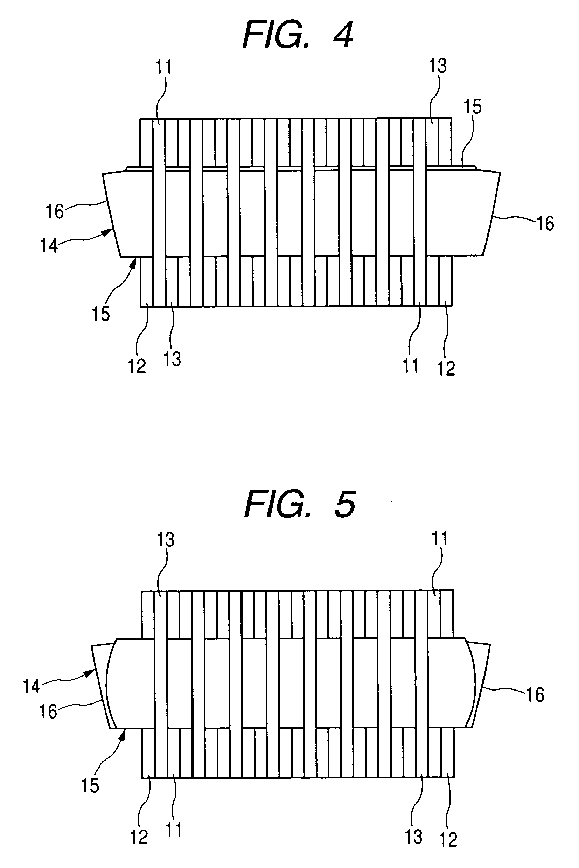

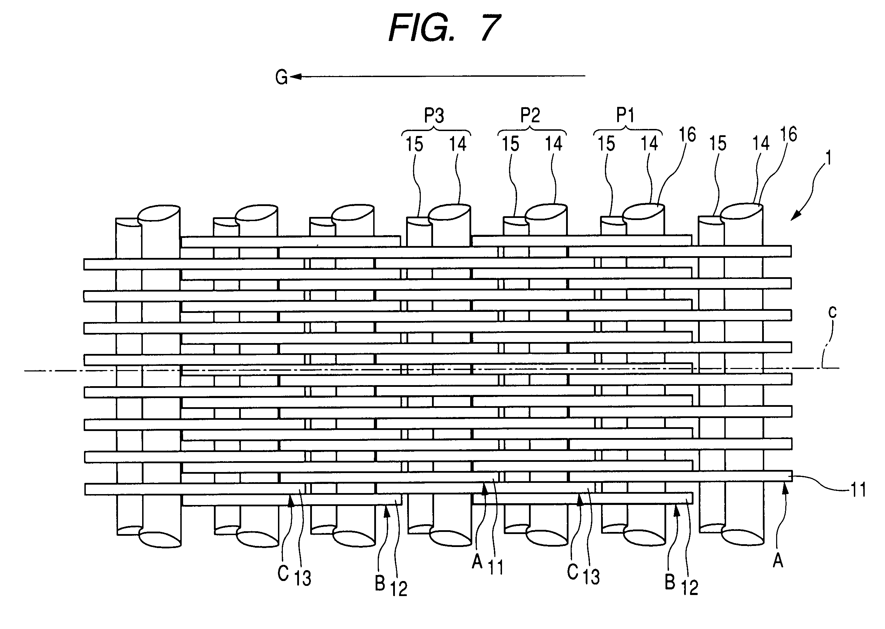

Fig. 1 is a perspective view showing a main construction of a transmission chain (hereinafter, simply referred to as 'chain') for a chain type CVT according to the first embodiment of the invention. The chain 1 according to the first embodiment includes a plurality of sets, each of sets being composed of three kinds of link rows, that is, a first link row A, a second link row B, and a third link row C arranged in a chain proceeding direction (arrow G). The sets are combined into one unit. As the link rows are connected to each other by pin members, the chain has an endless shape. In the meantime, the chain 1 has a threefold number of link rows. Figs. 2 to 7 are front, rear, right side, left side, plan, and bottom views.

The first, second, and third link rows A, B, and C each have a plurality of links 11, 12 and 13 arranged in the chain width direction. The link rows adjacent to each other in the chain proceeding direction are connected to each other by a pin member. To be more specific, a pin member P1 connects the first link row A and the second link row B, another pin member P2 connects the second link row B and the third link row C, and another pin member P3 connects the third link row C and the next first link row A. In the same manner, the link rows A, B, and C are continuously connected to each other in the order of the link rows A, B, and C. The width direction of the chain is orthogonal to the chain proceeding direction. In addition, the width direction of the chain is parallel to the longitudinal direction of the pin members.

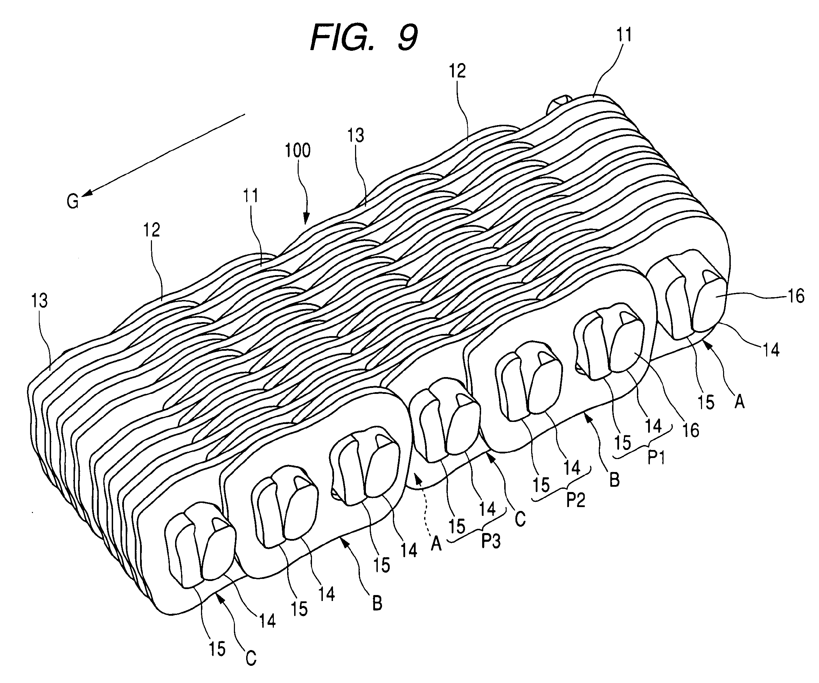

The pin member connects the link rows adjacent to each other in the chain proceeding direction, and connects the links arranged parallel to the width direction of the chain in the same link row. The pin member is constituted by a pair of a pin 14 (first pin) and a strip 15 (second pin). The pin 14 and the strip 15 are all formed of metallic material such as bearing steel, in a rod shape. The strip 15 has a smaller length in the longitudinal direction of the pin than the pin 14. As an end surface 16 of the first pin 14 of the pin member is brought into contact with a sheave surface (to which power is transmitted) of pulleys 2 and 3 (refer to Fig. 9), the chain 1 transmits power by a frictional force.

The links 11, 12, and 13 of each link row A, B, and C are formed of a rectangular flat member in which an external shape is composed of a gradual line. The links are substantially formed in the same shape. The links 11, 12 and 13 have the same thickness, and are formed of metallic material such as bearing steel. In Fig. 2, in each of the links 11, 12 and 13, a first through hole 17 and a second through hole 18 are formed at a predetermined interval. The first through hole 17 is formed at a front side of each of the links 11, 12 and 13, and the second through hole 18 is formed at a back side thereof in the chain proceeding direction (arrow G direction). The first through hole 17 and the second through hole 18 have different shapes from each other, and a pair of the pin 14 and the strip 15 is inserted into both through holes 17 and 18- A pair of the pin 14 and the strip 15 passes the first through hole 17 of one link row and the second through hole 18 of another link row.

As shown in Fig. 2, when seeing the first link row A and the second link row B adjacent to each other in the chain proceeding direction, the first link row A is connected with the second link row B by the pin 14 which is fixedly inserted into the second through hole 18 of the link 12 of the second link row B and rotatably inserted into the first through hole (not shown) of the link 11 of the first link row A, and the strip 15 which is rotatably inserted into the second through hole 18 of the link 12 of the second link row B and fixedly inserted into the first through hole (not shown) of the link 11 of the first link row A. The pair of the pin 14 and the strip 15 which are inserted into the same through hole (the first through hole 17 or the second through hole 18) relatively roll and move in contact with each other, so that the first link row A (link 11) and the second link row B (link 12) are flexibly connected to each other.

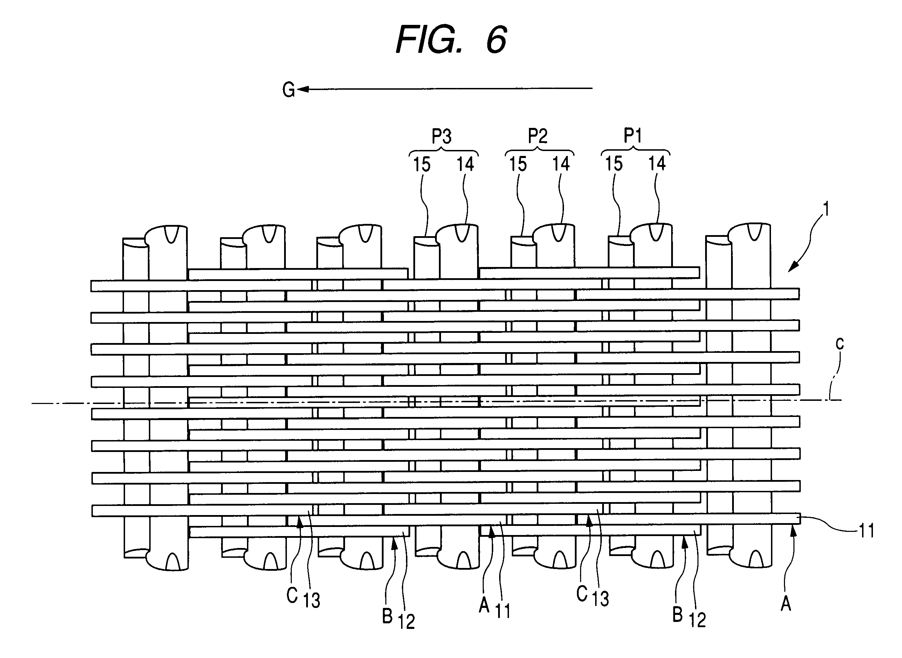

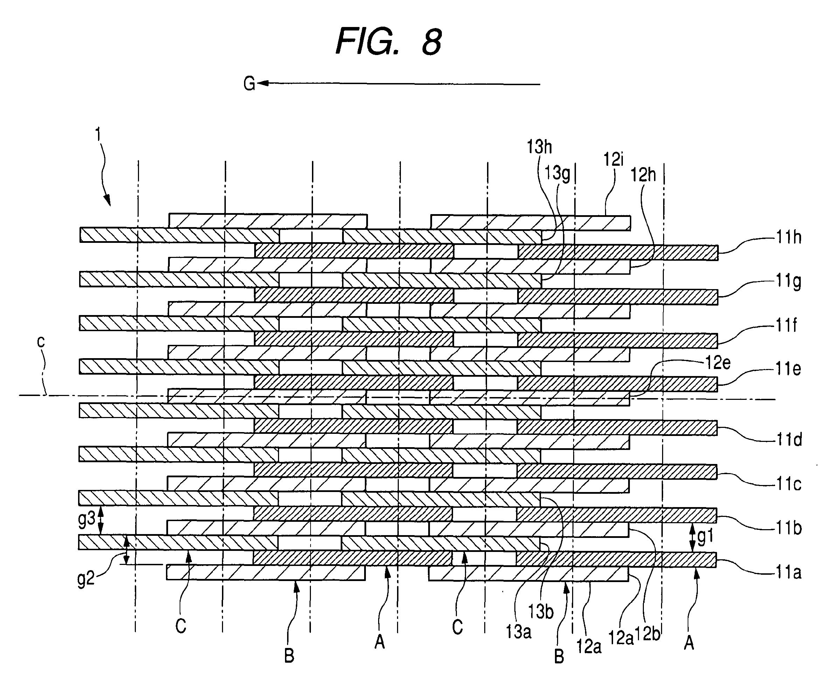

Fig. 8 is a plan view schematically showing an arrangement of a plurality of links of the chain 1 according to the invention, which corresponds to Fig. 6-In the meantime, the pin member is omitted in the drawing, and the position of the pin member is indicated by a double-dotted line. In the chain 1 according to the invention, the second link row B has an odd number of links 12, and the first link row A and the third link row C alternately arranged forward and backward in the chain proceeding direction of the second link row have an even number of links 11 and 13, respectively. In the meantime, in the chain 1 according to the first embodiment shown in Fig. 8, the first link row A has eight links 11a to 11h, the second link row B has nine links 12a to 12i, and the third link row C has eight links 13a to 13h. In Fig. 8, the link 11 is indicated by cross hatching, the link 12 is indicated by single hatching at wide intervals, and the link 13 is indicated by single hatching at narrow intervals.

As for the arrangement of the links of the chain 1 according to the invention, in each of the three kinds of link row A, B and C, two links adjacent to each other in the chain width direction of one link row interpose therebetween two links respectively belonging to the other two link rows A, B and C. All of the links of the link row A, B and C have an equal width, such that intervals between two links adjacent to each other in the chain width direction of one link row are equal in each of the link rows A, B and C. As a result, intervals g1 between the two links 11 of the first link row A are equal, intervals g2 between the two links 12 of the second link row B are equal, intervals g3 between the two links 13 of the third link row C are equal, and the intervals g1, g2 and g3 are equal.

To be more specific about the arrangement, first, in the first link row A, two links 11a and 11b which are adjacent to each other and located at endmost in the chain width direction interpose therebetween one link 13a of the third link row C and one link 12b of the second link row B. This arrangement is also applied to other links 11 located at the other endmost in the chain width direction in the first link row A, such that two links 11g and 11h which are adjacent to each other and located at the other endmost interpose therebetween one link 13g of the third link row C and one link 12h of the second link row B. In the first link row A, only two links 12 and 13 having the same width exist between two links 11 adjacent to each other, so that the intervals g1 between the links 11 are equal.

In the second link row B, two links 12a and 12b which are adjacent to each other and located at endmost in the chain width direction interpose therebetween one link 11a of the first link row A and one link 13a of the third link row C- This arrangement is also applied to other links 12 located at the other endmost in the chain width direction in the second link row B, such that two links 12h and 12i which are adjacent to each other and located at the other endmost interpose therebetween one link 11h of the first link row A and one link 13h of the third link row C. In the second link row B, only two links 11 and 13 having the same width exist between two links 12 adjacent to each other, so that the intervals g2 between the links 12 are equal. Further, an intermediate 12e of the nine links 12 is disposed on the centerline c in the chain width direction.

In the third link row C, two links 13a and 13b which are adjacent to each other and located at endmost in the chain width direction interpose therebetween one link 12b of the second link row B and one link 11b of the first link row A. This arrangement is also applied to other links 13 located at the other endmost in the chain width direction in the third link row C, such that two links 12g and 12h which are adjacent to each other and located at the other endmost interpose therebetween one link 12h of the second link row B and one link 11h of the first link row A. In the third link row C, only two links 11 and 12 having the same width exist between two links 13 adjacent to each other, so that the intervals g3 between the links 13 are equal.

The whole arrangement of the links of the chain 1 will be described more fully.

In the chain 1, one link 11 of the first link row A, one link 12 of the second link row B, and one link 13 of the third link row C are continuously arranged in a repetitive order from one end to the other end in the chain width direction. According to the first embodiment of Fig. 8, from one end in the chain width direction, one link 12 of the second link row B, one link 11 of the first link row A, and one link 13 of the next third link row C are arranged, and this order is regularly repeated until reaching the other end.

In addition, the chain 1 is asymmetric with respect to the centerline c. In other words, as for the second link row B, the links 12 are symmetrically disposed with respect to the centerline c, but as for the first and third link rows A and C, the links are asymmetrically disposed. Although the chain 1 is asymmetric, the chain has an endless shape as a whole; therefore, the chain is saturated by moment that is generated from the asymmetry.

In the chain 1 according to the invention, two links adjacent to each other in the chain width direction of one link row do not interpose therebetween two links adjacent to each other in the chain width direction of the other link row. To be more specific about this, in the chain according to the related art shown in Fig. 17, for example, the links 50a and 50b adjacent to each other in the chain width direction of the first link row A interpose therebetween two links 52a and 52b adjacent to each other in the chain width direction of the third link row C. Therefore, disadvantages are found in a lubricated surface in the related art, so that friction loss increases between the first link row A and the third link row C, which causes power transmission loss. However, according to the invention, because friction loss decreases between the link rows, it is possible to suppress power transmission loss.

According to the first embodiment, in each of the sets composed of link rows A, B, and C, because intervals between two links adjacent to each other in the chain width direction of one link row are equal, when load is applied to the chain 1 in the chain proceeding direction, the load can be made equal within one link row. Particularly, because the first link row A and the third link row C has less links than the second link row B, load that is applied to one link is likely to increase. Thus, as the intervals between the links are made equal, it is possible to prevent one link from being subject to a great load.

As described above, it is prevented that each of the links is fatigued with rotation of the chain 1, so that the chain has better durability, and can stably transmit power for a long time.

### Second Embodiment

Now, a second embodiment according to the present invention will be described in detail with reference to Figs. 9 to 15.

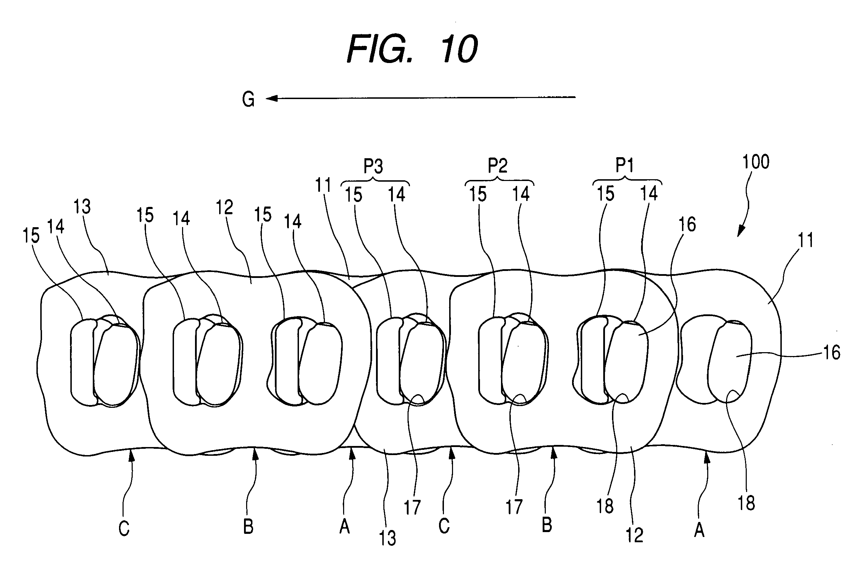

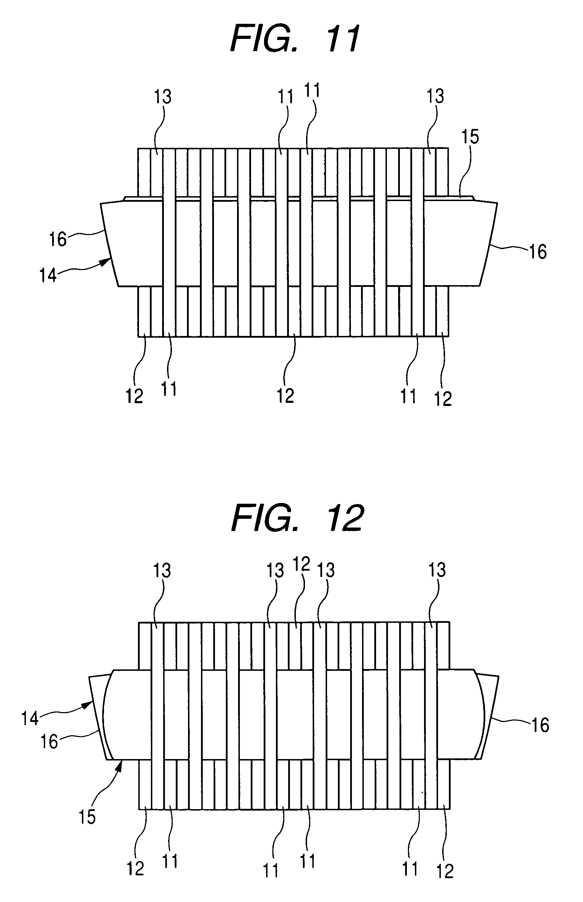

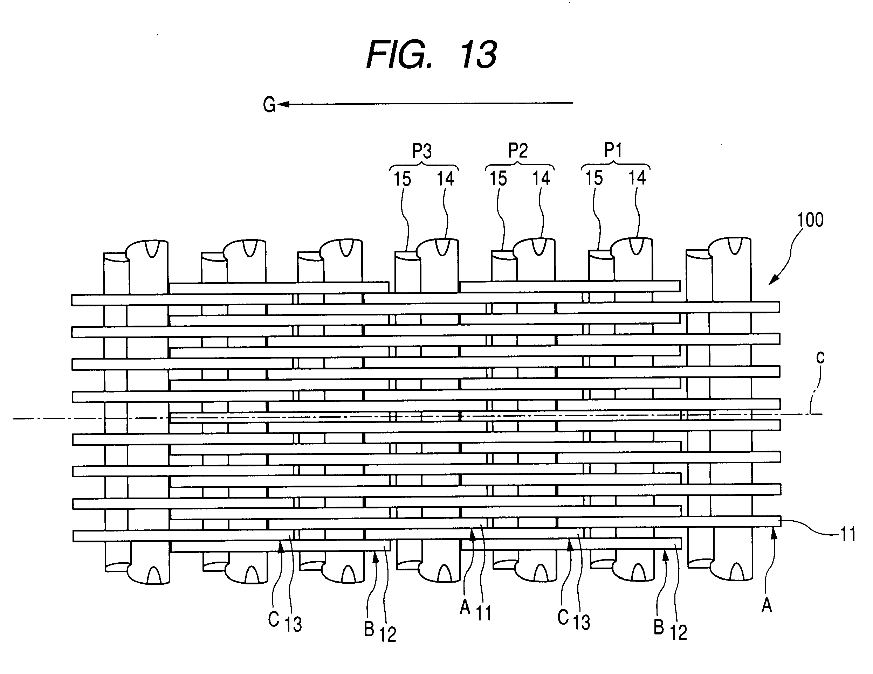

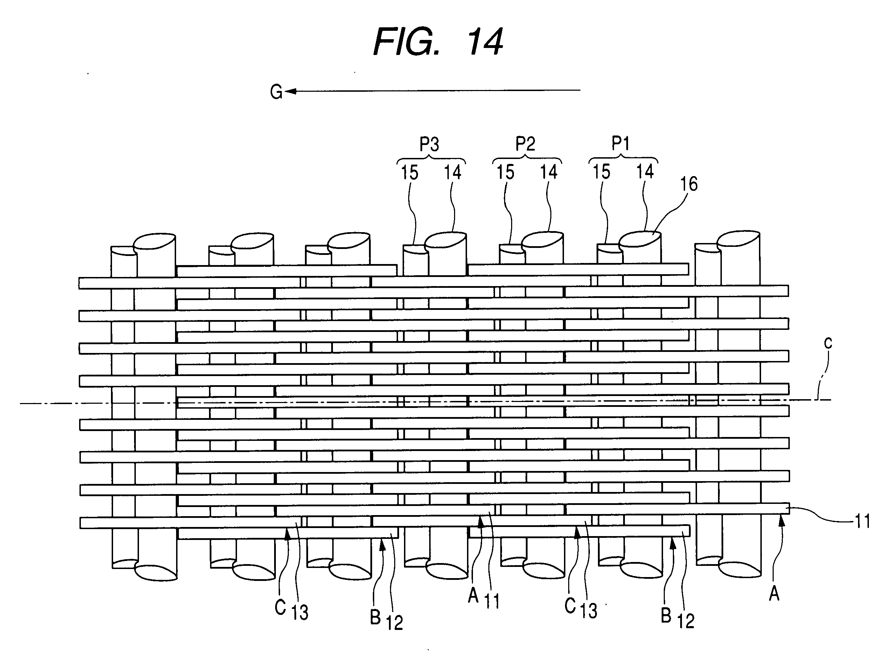

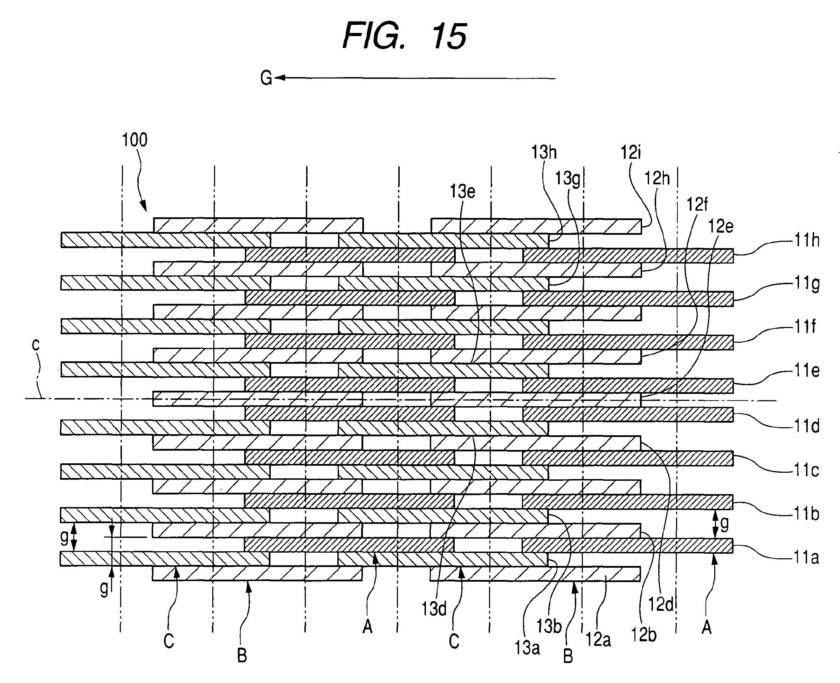

Fig. 9 is a perspective view showing a main construction of a transmission chain 100 for a chain type CVT according to a second embodiment of the invention. Fig. 10 is a front view showing the main construction of the transmission chain 100 according to the second embodiment. Fig. 11 is a right side view showing the main construction of the transmission chain 100 according to the second embodiment. Fig. 12 is a left side view showing the main construction of the transmission chain 100 according to the second embodiment. Fig. 13 is a plan view showing the main construction of the transmission chain 100 according to the second embodiment. Fig. 14 is a bottom view showing the main construction of the transmission chain 100 according to the second embodiment. Fig. 15 is a plan view schematically showing an arrangement of a plurality of links according to the second embodiment.

Those constituent portions, basically identical to those of the first embodiment, will be designated by identical reference numerals, respectively, and detailed description thereof will be omitted.

As for an arrangement of the links of the chain 100 according to the second embodiment of the invention, in each of the three kinds of link row A, B and C, two links adjacent to each other in the chain width direction of one link row and located at endmost in the chain width direction interpose therebetween two links belonging to the other two link rows, respectively. To be more specific, according to the embodiment, one link row has an arrangement in which two links which are adjacent to each other and located apart from the center part in the chain width direction of one link row interpose therebetween two links belonging to the other two link rows, respectively. All of the links of the link row A, B and C have an equal width, such that intervals g between two links interposing other two links therebetween are equal.

To be more specific about the arrangement, first, in the first link row A, two links 11a and 11b which are adjacent to each other and located at endmost in the chain width direction interpose therebetween one link 13b of the third link row C and one link 12b of the second link row B. This arrangement is also applied to other links 11 located at the other endmost in the chain width direction of the first link row A, such that two links 11h and 11g which are adjacent to each other and located at the other endmost interpose therebetween one link 13g of the third link row C and one link 12h of the second link row B. As a result, only two links having the same width are interposed between the two links which are adjacent to each other and located at endmost.

Moreover, apart from the center part in the chain width direction of the first link row A, that is, except for the two links 11d and 11e, two links which are adjacent to each other in the chain width direction interpose therebetween two links 12 and 13 belonging to the other two link rows B and C, respectively. In the meantime, the two links 11d and 11e at the center part interpose therebetween only one link 12e of the second link row B. Therefore, in the first link row A, the intervals g between two links, except for the two links 11d and 11e located at the center part, are equal.

In the second link row B, two links 12a and 12b which are adjacent to each other and located at endmost in the chain width direction interpose therebetween one link 13a of the third link row C and one link 111a of the first link row A. This arrangement is also applied to other links 12 located at the other endmost in the chain width direction of the second link row B, such that two links 12h and 12i which are adjacent to each other and located at the other endmost interpose therebetween one link 13h of the third link row C and one link 11h of the first link row A. As a result, only two links having the same width are interposed between the two links which are adjacent to each other and located at endmost.

In the second link row B, the link 12e among the nine links 12 which is located at the center is disposed on the centerline c in the chain width direction. In addition, two links 12 adjacent to each other in the second link row B interpose therebetween two links 11 and 13 belonging to the first and third link rows A and C, respectively, so that, the intervals g between the two links adjacent to each other in the second link row B are equal.

In the third link row C, two links 13a and 13b which are adjacent to each other and located at endmost in the chain width direction interpose therebetween one link 11a of the first link row A and one link 12b of the second link row B. This arrangement is also applied to other links 13 located at the other endmost in the chain width direction of the third link row C, such that two links 13h and 13g which are adjacent to each other and located at the other endmost interpose therebetween one link 11h of the first link row A and one link 12h of the second link row B. As a result, only two links having the same width are interposed between the two links which are adjacent to each other and located at endmost.

Moreover, apart from the center part in the chain width direction of the third link row C, that is, except for the two links 13d and 13e, two links which are adjacent to each other in the chain width direction interpose therebetween two links 11 and 12 belonging to the other two link rows A and B respectively. In the meantime, the two links 13d and 13e at the center part interpose therebetween two links 11d and 11e of the first link row A and one link 12e of the second link row B. Therefore, in the third link row C, the intervals g between two links, except for the two links 13d and 13e located at the center part, are equal.

The whole arrangement of the links of the chain 100 will be described more fully. The first link row A, the second link row B, and the third link row C are symmetrically disposed with respect to the centerline c in the chain width direction. Therefore, since load applied to the transmission chain is made equal, it is possible to prevent moment from being generated due to the construction of the transmission chain.

In the chain 100 according to the invention, two links adjacent to each other in the chain width direction of one link row do not interpose therebetween two links adjacent to each other in the chain width direction of the other link rows. To be more specific about this, in the chain according to the related art shown in Fig. 17, for example, the links 50a and 50b adjacent to each other in the chain width direction of the first link row A interpose therebetween two links 52a and 52b adjacent to each other in the chain width direction of the third link row C. Therefore, disadvantages are found in a lubricated surface in the chain according to the related art, so that friction loss increases between the first link row A and the third link row C, which causes power transmission loss. However, according to the invention, because friction loss decreases between the link rows, it is possible to prevent power transmission loss.

According to the embodiment, in each set of the link rows A, B, and C, because two links adjacent to each other in the chain width direction of one link row interpose therebetween only two links belonging to the other two link rows, the intervals g between the links can be made small. Even when load is applied to end portions of the link rows A, B and C, the load can be divided into the link located at endmost in the chain width direction and the link closer to the center part. Therefore, it is prevented that a great load is applied to the link located at endmost. Particularly, because the first link row A and the third link row C has less links than the second link row B, load that is applied to one link is likely to increase. Thus, as the intervals g between the two links located at endmost in the chain width direction are made equal, it is possible to prevent one link from being subject to a great load.

In each of the sets composed of link rows A, B, and C, two links which are adjacent to each other apart from the center part in the chain width direction of one link row interpose therebetween two links belonging to the other two link rows, respectively. Accordingly, the intervals g between two links which are adjacent to each other apart from the center part in the chain width direction can be made small, and the intervals between two links apart from the center part are made equal. Therefore, load applied to one link row can be made equal within the link row.

As described above, it is prevented that each of the links is fatigued with rotation of the chain 100, so that the chain has better durability, and can stably transmit power for a long time.

The transmission chain according to the invention is not limited to the embodiment can be modified in various forms within the scope of the invention. For example, in the chain 100 shown in Figs. 13 and 15, the chain proceeding direction of the first link row A and the third link row C can be exchanged with respect to the second link row B. Referring to Fig. 15, with respect to the center link 12e of the second link row B having nine links 12, links 11d and 11e of the first link row A are disposed behind the link 12e in the chain proceeding direction. However, although not shown, on the contrary, the links 11d and 11e of the first link row A may be disposed before the link 12e in the chain proceeding direction. Further, the number of the link of the link rows A, B and C can be changed.

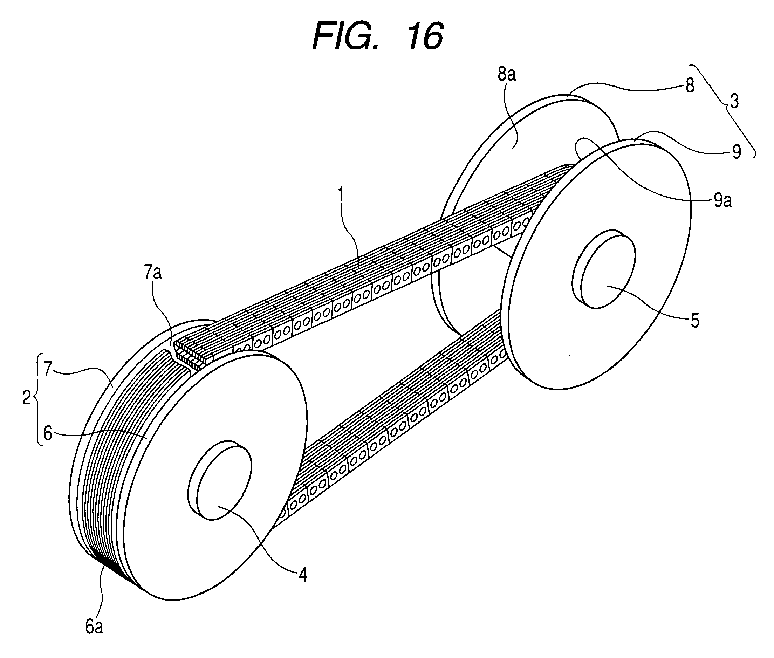

Fig. 16 is a perspective view schematically showing a main construction of a chain type CVT (hereinafter, simply referred to 'CVT') of the transmission according to the embodiment of the invention. The CVT according to the embodiment is mounted in, an automobile, for example, and includes a metallic drive pulley 2 serving as a first pulley, a metallic driven pulley 3 serving as a second pulley, and the endless transmission chain 1 provided between the pulleys. The chain 1 of Fig. 16 shows a cross section of a part thereof.

The drive pulley 2 is disposed at an input shaft 4 which is connected to the engine so as to rotate in conjunction with the input shaft 4, and includes a stationary sheave 6 having a conical sheave surface 6a, a movable sheave 7 having a conical sheave surface 7a facing the sheave surface 6a. A V-shaped groove is formed by the sheave surfaces 6a and 7a, and the sheave surfaces 6a and 7a forming the groove forcefully insert therebetween both ends of the pin member (first pin 14) of the chain 1, a frictional force generated between both of the end surfaces and the sheave surfaces transmits power between the first and second pulleys. Meanwhile, in the case of disposing a contact member at both end portions of a center main body of the pin member for frictional contact, the end surface of the pin member includes an end surface of the contact member.

Since a hydraulic actuator (not shown) provided to change the width of the groove is connected to the movable sheave 7, the width of the groove is changed by the movable sheave 7 during changing speed. Therefore, a winding radius of the chain 1 with respect to the input shaft 4 is changed.

In the meantime, the driven pulley 3 is disposed to an output shaft 5 that is connected to a driving wheel so as to rotate in conjunction with the output shaft 5-Similar to the drive pulley 2, the driven pulley 3 includes a stationary sheave 8 and a movable sheave 9. The stationary sheave 8 and the movable sheave 9 have the sheave surfaces 8a and 9a, respectively, for forming the groove into which the chain 1 is forcefully inserted. A hydraulic actuator (not shown) is connected to the movable sheave 9 of the pulley 3, as similar to the case of the movable sheave 7 of the drive pulley 2, the width of the groove is changed by moving the movable sheave 9 during changing speed. Therefore, a winding radius of the chain 1 with respect to the output shaft 5 is changed.

The chain 1 provided between the drive pulley 2 and the driven pulley 3 is the chain according to the invention. Since the detailed description about the chain is already described above, it will be omitted.

With the above-describe construction, the CVT according to the embodiment of the invention performs constantly variable transmission as follows. To decrease the rotation speed of the output shaft 5, the width of the groove of the drive pulley 2 is increased by moving the movable sheave 7, so that a winding radius of the chain 1 with respect to an input shaft 11 is decreased. On the other hand, the width of the groove of the driven pulley 3 is decreased by moving the movable sheave 9, so that a winding radius of the chain 1 with respect to an output shaft 21 is increased. Therefore, the rotation speed of the output shaft 21 can be decreased. On the contrary, to increase the rotation speed of the output shaft 21, an opposite operation to the above-described operation is performed with respect to the drive pulley 2 and the driven pulley 3.

In the CVT having the above-described construction according to the embodiment of the invention, it is possible to improve durability by using the transmission chain 1 shown in Figs. 1 to 8 according to the first embodiment and the transmission chain 100 shown in Figs. 9 to 15 according to the second embodiment. Therefore, it is possible to obtain a CVT which can stably transmit power for a long time.

In the CVT, power is transmitted by bring the end surface 16 of the pin 14 of the chain 1 into contact with the respective sheave surfaces of the drive pulley 2 and the driven pulley 3. Therefore, in the chain 1, a great load is applied to the link located at endmost in the chain width direction of one link row, than to the link located at the center part. However, in the chain 1 according to the invention, two links which are adjacent to each other and located at endmost in the chain width direction of one link row interpose two links belonging to other two link rows, respectively; therefore, the interval between the links located at endmost is decreased, so that it is prevented that a great load is locally applied to the link located at endmost in the chain width direction.

The transmission according to the invention is not limited to the embodiment in which the width of the groove of both of the drive pulley and the driven pulley. For example, only the width of the groove of either the drive pulley or the driven pulley can be changed, while the width of the other groove is fixed. Further, unlike the embodiment in which the width of the groove is continuously (non-stage) changed, the transmission may use a method of changing the width of the groove in a stepped manner or in a fixed manner or the like.

The transmission chain according to the invention is not limited to the embodiment shown in the drawings, it can be modified in various forms without departing the scope of the invention, and it is possible to change the number of links belonging to the link rows A, B and C.

## Claims

1. A transmission chain according to the invention includes:
a plurality of first link rows, each of the first link rows including a plurality of links arranged in a chain width direction;
a plurality of second link rows, each of the second link rows including a plurality of links arranged in the chain width direction;
a plurality of third link rows, each of the third link rows including a plurality of links arranged in the chain width direction,
wherein the first link rows, the second link rows and the third link rows are arranged so that the first link row, the second link row and the third link row are repeatedly arranged in this order in a chain proceeding direction,
wherein the adjacent link rows are respectively coupled by pin members, end surfaces of the pin members being in contact with a surface to which power is to be transmitted,
wherein the two links of the first link row, which are adjacent to each other and located at endmost in the chain width direction, interpose therebetween the two links respectively belonging to the second and third link rows,
wherein the two links of the second link row, which are adjacent to each other and located at endmost in the chain width direction, interpose therebetween the two links respectively belonging to the third and first link rows, wherein the two links of the third link row, which are adjacent to each other and located at endmost in the chain width direction, interpose therebetween the two links respectively belonging to the first and second link rows.

2. The transmission chain according to claim 1,
wherein all of the two adjacent two links of the first link row interpose therebetween the two links respectively belonging to the second and third rows,
wherein all of the two adjacent two links of the second link row interpose therebetween the two links respectively belonging to the third and first rows, and
wherein all of the two adjacent two links of the third link row interpose therebetween the two links respectively belonging to the first and second rows.

3. The transmission chain according to claim 2, wherein at least two of the first, second and third link rows are asymmetric with respect to a centerline in the chain width direction.

4. The transmission chain according to claim 1,
wherein each of the first, second and third link rows has an arrangement in which the two links which are adjacent to each other and located apart from the center part in the chain width direction interpose therebetween two links belonging to the other two link rows, respectively.

5. The transmission chain according to claim 1,
wherein in each of the first, second and third link rows, the links thereof are symmetrically disposed with respect to a centerline in the chain width direction.

6. A transmission comprising:
a first pulley that includes a conical sheave surface;
a second pulley that includes a conical sheave surface; and
a transmission chain that is provided between the first pulley and the second pulley,
wherein the transmission chain is the transmission chain according to any one of claims 1 to 5.
